# EUROPEAN PATENT SPECIFICATION

(11) **EP 4 378 975 B1**
(45) Date of publication and mention of the grant of the patent: **11.11.2026**
(21) Application number: 22849802.8
(22) Date of filing: 21.07.2022
(51) Int. Cl.: C08G 63/668, C08G 63/183, C08G 63/199, C08L 67/02

(54) **EXTRUSION BLOW RESIN HAVING EXCELLENT EXTRUSION PROCESSABILITY AND BEING RECYCLABLE, AND COMPOSITION COMPRISING SAME**
EXTRUSIONSBLASHARZ MIT HERVORRAGENDER EXTRUSIONSVERARBEITBARKEIT UND RECYCLINGFÄHIGKEIT SOWIE ZUSAMMENSETZUNG DAMIT
RÉSINE DE SOUFFLAGE PAR EXTRUSION DOTÉE D'UNE EXCELLENTE APTITUDE AU TRAITEMENT PAR EXTRUSION ET RECYCLABLE, ET COMPOSITION LA COMPRENANT

(30) Priority: 28.07.2021 KR 20210099148
(43) Date of publication of application: 05.06.2024
(73) Proprietor: SK Chemicals Co., Ltd., Seongnam-si, Gyeonggi-do 13494 (KR)
(72) Inventor: OH, Hyun-Woo, Seongnam-si, Gyeonggi-do 13494 (KR); LEE, Yoo Jin, Seongnam-si, Gyeonggi-do 13494 (KR); HWANG, Da-Young, Seongnam-si, Gyeonggi-do 13494 (KR)
(74) Representative: Berggren Oy
(86) International application number: PCT/KR2022/010686
(87) International publication number: WO 2023/008826

(56) References cited:
- WO-A1-2020/067664
- KR-A- 20190 001 551
- KR-A- 20200 089 585
- KR-A- 20200 098 065
- KR-A- 20210 009 844
- KR-A- 20210 025 466

## Description

### [TECHNICAL FIELD]

### CROSS-REFERENCE TO RELATED APPLICATION(S)

The present application is based on, and claims priority from, Korean Patent Application No. 10-2021-0099148, filed on July 28, 2021.

The present invention relates to an extrusion blow resin having excellent extrusion processability and being recyclable, and a composition including the same.

### [BACKGROUND ART]

Waste plastics, which account for about 70% of marine pollution, have recently emerged as a serious social issue, and accordingly, each country is regulating the use of disposable plastics, and simultaneously, promoting the reuse of waste plastics. Currently, waste plastics are recycled by collecting, pulverizing, and cleaning waste plastics, melting and extruding the same, re-pelletizing the same, and then using the same as raw materials. However, it is very difficult to provide good-quality products due to foreign substances in waste plastics. Accordingly, there is an urgent need for research to produce good-quality plastic products from waste plastics.

In addition, existing polyethylene terephthalate resins are widely used commercially due to their low price and excellent physical/chemical properties. However, they have a relatively low viscosity, as compared to polyethylene or polypropylene, and thus it is necessary to adjust the molding temperature to very low temperatures during extrusion blow molding. Therefore, when polyethylene terephthalate is used, there are limitations in manufacturing a constant parison using a single or multiple head method.

WO2020067664A1 discloses polymer resins made from terephthalic acid, cyclohexanedimethanol and isosorbide exhibiting improvements concerning the cold crystallization temperature and melting point.

Accordingly, there is a demand for the development of an extrusion blow resin polyester having excellent extrusion processability and being recyclable, in which isosorbide is included as a monomer in the polyester resin.

### [DETAILED DESCRIPTION OF THE INVENTION]

### [Technical Problem]

There are provided an extrusion blow resin having excellent extrusion processability and being recyclable, and a composition including the same. Particularly, the extrusion blow resin may be a polyester resin including isosorbide as a monomer, and a composition including the same.

### [Technical Solution]

To achieve the above objects, there is provided a polyester resin as follows:
the polyester resin including a structure, in which an acid moiety derived from a dicarboxylic acid or a derivative thereof and a diol moiety derived from a diol are repeated, and satisfying the following Equation 1: [Equation 1] $20 < \left(X*Y\right) / \left(Z*100\right) < 160$
in Equation 1,
X represents a melting point (unit: °C) of the polyester resin,
Y represents a cold crystallization temperature (unit: °C) of the polyester resin, and
Z represents a crystallization half-time (unit: min) of the polyester resin.

Hereinafter, the present invention will be described in detail.

As used herein, the 'residue' means a certain moiety or unit that is included in the product of a chemical reaction and is derived from a specific compound, when the specific compound participates in the chemical reaction. Specifically, a 'residue' of a dicarboxylic acid component or a 'residue' of a diol component respectively means a moiety derived from the dicarboxylic acid component or a moiety derived from the diol component in a polyester resin formed by an esterification or polycondensation reaction.

### Polyester resin

The polyester resin according to the present invention has a structure, in which an acid moiety derived from a dicarboxylic acid or derivative thereof and a diol moiety derived from a diol are repeated by polymerizing the dicarboxylic acid or derivative thereof and the diol. As used herein, the acid moiety and the diol moiety refer to the residues remaining after the dicarboxylic acid or derivative thereof and the diol are polymerized, and hydrogens, hydroxy groups, or alkoxy groups are removed therefrom. The dicarboxylic acid or derivative thereof and diol will be examined in more detail below, but the dicarboxylic acid or derivative thereof may be mainly, for example, terephthalic acid or a derivative thereof, and the diol may be mainly ethylene glycol.

The polyester resin may satisfy the following Equation 1: [Equation 1] $20 < \left(X*Y\right) / \left(Z*100\right) < 160$ in Equation 1,
X represents a melting point (unit: °C) of the polyester resin,
Y represents a cold crystallization temperature (unit: °C) of the polyester resin, and
Z represents a crystallization half-time (unit: min) of the polyester resin.

Specifically, [Equation 1] may be more than 20, more than 30, more than 40, more than 50, more than 60, or more than 70, and less than 160, less than 150, less than 140, less than 130, less than 120, less than 110, less than 100, less than 90, or less than 80.

When the value of Equation 1 is 20 or less, crystallinity of the polyester resin is low, and therefore, the effect of improving the crystallization rate may be poor. Therefore, the resulting product exhibits a haze of 5% or more after ethanol immersion to exhibit poor chemical resistance, and has ΔTm of 10°C or higher and a very low draw ratio, and therefore, there may be a problem that it is difficult to recycle the product by blending with PET.

On the contrary, when the value of Equation 1 is 160 or more, the crystallinity is excessively high, which reduces processability, the weight of an extrusion blow molded article is light, and thus there may be a problem that it is difficult to mold into a thick product, and the draw ratio is excessive high, and thus there may be a problem that heavy-blow is not possible during extrusion blow molding (EBM). In addition, after ethanol immersion, the haze is 5% or more, and therefore, chemical resistance may be poor.

The melting point (Tₘ) of the polyester resin composition may be 200°C to 230°C. Specifically, the melting point may be 200°C or higher, 205°C or higher, or 210°C or higher, and 230°C or lower, 225°C or lower, or 220°C or lower.

Further, the cold crystallization temperature (T_{mc}) of the polyester resin composition may be 130°C to 150°C. Specifically, the cold crystallization temperature may be 130°C or higher, 135°C or higher, or 140°C or higher, and 150°C or lower, or 145°C or lower.

Further, the crystallization half-time (T_{1/2}) of the polyester resin composition may be 1 minute to 15 minutes. Specifically, the crystallization half-time may be 1 minute or more, 2 minutes or more, 3 minutes or more, or 4 minutes or more, and 15 minutes or less, 14 minutes or less, 13 minutes or less, 12 minutes or less, 11 minutes or less, 10 minutes or less, 9 minutes or less, 8 minutes or less, 7 minutes or less, or 6 minutes or less.

The melting point, the cold crystallization temperature, and the crystallization half-time may be a melting point, a cold crystallization temperature, and a crystallization half-time when the polyester resin composition has the maximum crystallinity. Specifically, the melting point, the cold crystallization temperature, and the crystallization half-time may be a melting point, a cold crystallization temperature, and a crystallization half-time after pretreating each of polyester resins prepared in Examples and Comparative Examples to have the maximum crystallinity in the corresponding composition through a process of kneading with a crystallizing agent at a ratio of 10 ppm to 100 ppm using a twin-screw extruder around 230°C to 250°C.

The polyester resin includes a diol moiety derived from a diol containing ethylene glycol and a comonomer in order to satisfy the above-described parameters of Equation 1, and the diol moiety derived from the comonomer may be 9 mol% to 17 mol% with respect to the total diol moiety. The polyester resin of the present invention essentially includes a diol moiety derived from isosorbide as the diol moiety derived from the comonomer. Due to this structure, when mixed with polyethylene terephthalate, its recycling is possible, thereby providing sustainable plastics.

The diol moiety derived from the comonomer may include a diol moiety derived from isosorbide (1,4:3,6-dianhydroglucitol) and a diol moiety derived from cyclohexanedimethanol.

In other words, in the polyester resin, the total content of the diol moiety derived from isosorbide and cyclohexanedimethanol may be 9 mol% to 17 mol%. Specifically, the total content of the diol moiety derived from isosorbide and cyclohexanedimethanol may be 9 mol% or more, 10 mol% or more, 11 mol% or more, or 12 mol% or more, and 17 mol% or less, 16 mol% or less, 15 mol% or less, or 14 mol% or less.

When the diol moiety derived from isosorbide and cyclohexanedimethanol which are the comonomers is less than 9 mol%, the value of Equation 1 is 160 or more, and thus there is an aspect in which processability may not be improved due to excessive crystallinity, and after ethanol immersion, the haze is 5% or more, leading to poor chemical resistance, and the draw ratio is high, and thus there may be a problem that heavy-blow is not possible during extrusion blow molding (EBM).

Further, when the diol moiety derived from the comonomers is more than 17 mol%, the value of Equation 1 is 20 or less, and the crystallinity is low, and therefore, the effect of improving the crystallization rate may be poor, and after ethanol immersion, the haze is 5% or more to exhibit poor chemical resistance, and ΔTm is 10°C or higher, and thus there may be a problem that it is difficult to recycle the product by blending with PET.

The polyester resin may include 0.1 mol% to 3 mol% of the diol moiety derived from isosorbide with respect to the total diol moiety. Specifically, it may include 0.1 mol% or more, 0.5 mol% or more, or 1 mol% or more, and 3 mol% or less, 2.5 mol% or less, or 2 mol% or less of the diol moiety derived from isosorbide with respect to the total diol moiety. When the diol moiety derived from isosorbide is included in an amount of less than 0.1 mol% or is not included, the value of [Equation 1] is 160 or more, and thus there is an aspect in which processability may not be improved due to excessive crystallinity, and after ethanol immersion, the haze is 5% or more, leading to poor chemical resistance, and the draw ratio is high, and thus there may be a problem that heavy-blow is not possible during extrusion blow molding (EBM). On the contrary, when the diol moiety is included in an amount of more than 3 mol%, the melting point is not measured, or even if measured, the crystallinity is low, and the value of [Equation 1] is 20 or less, and thus the effect of improving the crystallization rate may be poor, and after ethanol immersion, the haze is 5% or more to exhibit poor chemical resistance, and ΔTm is 10°C or higher and thus there may be a problem that it is difficult to recycle the product by blending with PET.

Further, cyclohexanedimethanol may be further included as the diol moiety comonomer, in addition to isosorbide. The diol moiety derived from the cyclohexanedimethanol is included in an amount of 8 mol% to 16 mol% with respect to the total diol, thereby providing a polyester resin satisfying Equation 1. Specifically, the diol moiety derived from the cyclohexanedimethanol is included in an amount of 8 mol% or more, 9 mol% or more, or 10 mol% or more, and 16 mol% or less, 15 mol% or less, 14 mol% or less, 13 mol% or less or 12 mol% or less with respect to the total diol moiety. When the diol moiety derived from the cyclohexanedimethanol is included in an amount of less than 8 mol%, the value of [Equation 1] is 160 or more, and thus there is an aspect in which processability may not be improved due to excessive crystallinity, and after ethanol immersion, the haze is 5% or more, leading to poor chemical resistance, and the draw ratio is high, and thus there may be a problem that heavy-blow is not possible during extrusion blow molding (EBM). On the contrary, when the diol moiety derived from cyclohexanedimethanol is included in an amount of more than 16 mol%, the value of [Equation 1] is 20 or less, and thus the effect of improving the crystallization rate may be poor, and after ethanol immersion, the haze is 5% or more to exhibit poor chemical resistance, and ΔTm is 10°C or higher and thus there may be a problem that it is difficult to recycle the product by blending with PET.

The polyester resin may be prepared through the step of an esterification or transesterification reaction of the dicarboxylic acid or derivative thereof and the diol; and the step of a polycondensation reaction of the esterification or transesterification reaction product.

A catalyst may be used in the esterification or transesterification reaction. The catalyst may include a methylate of sodium or magnesium; an acetate, a borate, a fatty acid salt, or a carbonate of Zn, Cd, Mn, Co, Ca, Ba, etc.; a metal Mg; an oxide of Pb, Zn, Sb, Ge, etc.

The esterification or transesterification reaction may be carried out in a batch, semi-continuous, or continuous manner. The respective raw materials may be separately injected, but they are preferably injected in the form of a slurry in which the dicarboxylic acid or derivative thereof is mixed with the diol.

A polycondensation catalyst, a stabilizer, an orthochromatic agent, a crystallizing agent, an antioxidant, a branching agent, etc. may be added to the slurry before the starting of the esterification or transesterification reaction, or to the product after the completion of the reaction.

However, the injection timing of the above-described additives is not limited thereto, and the additives may be injected at any time point during the preparation of the polyester resin. As the polycondensation catalyst, one or more selected from common titanium-, germanium-, antimony-, aluminum-, and tin-based compounds may be appropriately used. The useful titanium-based catalyst may be exemplified by tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer, etc. Further, the useful germanium-based catalyst may be exemplified by germanium dioxide, copolymers using the same, etc. As the stabilizer, common phosphorus-based compounds such as phosphoric acid, trimethyl phosphate, triethyl phosphate, etc. may be used, and an addition amount thereof is 10 ppm to 200 ppm on the basis of phosphorus element with respect to the weight of the final polymer (polyester resin). When the addition amount of the stabilizer is less than 10 ppm, it is apprehended that the stabilization effect is insufficient, leading to yellowing of the polymer. When the addition amount is more than 200 ppm, it is apprehended that a polymer having a high degree of polymerization may not be obtained.

Further, the orthochromatic agent added to improve a color of the polymer may be exemplified by common orthochromatic agents such as cobalt acetate, cobalt propionate, etc., and an addition amount thereof is 10 ppm to 200 ppm on the basis of cobalt element with respect to the weight of the final polymer (polyester resin). As needed, as the organic orthochromatic agent, an anthraquionone-based compound, a perinone-based compound, an azo-based compound, a methine-based compound, etc. may be used, and commercially available products include toners such as Clarient's Polysynthren Blue RLS and Clarient's Solvaperm Red BB, etc. An addition amount of the organic orthochromatic agent may be 0 ppm to 50 ppm with respect to the weight of the final polymer. When the content of the orthochromatic agent exceeds the above range, yellowing of the polyester resin may not be sufficiently prevented or physical properties may be deteriorated.

The crystallizing agent may be exemplified by a nucleating agent, a UV absorber, a polyolefin-based resin, a polyamide resin, etc. The antioxidant may be exemplified by a hindered phenol-based antioxidant, a phosphite-based antioxidant, a thioether-based antioxidant, a mixture thereof, etc.

The esterification reaction may be carried out at a temperature of 200°C to 300°C or 230°C to 280°C and a pressure of 0 kgf/cm² to 10.0 kgf/cm² (0 mmHg to 7355.6 mmHg), 0 kgf/cm² to 5.0 kgf/cm² (0 mmHg to 3677.8 mmHg) or 0.1 kgf/cm² to 3.0 kgf/cm² (73.6 mmHg to 2206.7 mmHg). Further, the transesterification reaction may be carried out at a temperature of 150°C to 270°C or 180°C to 260°C and 0 kgf/cm² to 5.0 kgf/cm² (0 mmHg to 3677.8 mmHg) or 0.1 kgf/cm² to 3.0 kgf/cm² (73.6 mmHg to 2206.7 mmHg). Here, the pressures outside the parentheses refer to gauge pressures (expressed in kgf/cm² unit) and the pressures inside parentheses refer to absolute pressures (expressed in mmHg unit).

When the reaction temperature and pressure exceed the above range, it is apprehended that physical properties of the polyester resin may deteriorate. The reaction time (average retention time) may be commonly 1 hr to 24 hrs or 2 hrs to 8 hrs, and may varying depending on the reaction temperature, pressure, a molar ratio of diol to the dicarboxylic acid or derivative thereof to be used.

The product obtained through the esterification or transesterification reaction may be prepared as a polyester resin having a higher degree of polymerization via a polycondensation reaction. In general, the polycondensation reaction may be carried out at a temperature of 150°C to 300°C, 200°C to 290°C or 260°C to 290°C and a reduced pressure of 400 mmHg to 0.01 mmHg, 100 mmHg to 0.05 mmHg, or 10 mmHg to 0.1 mmHg. Here, the pressures refer to absolute pressures. The reduced pressure of 400 mmHg to 0.01 mmHg is for removing glycol which is a by-product of the polycondensation reaction and unreacted materials such as isosorbide, etc. Therefore, when the reduced pressure exceeds the above range, it is apprehended that the removal of by-products and unreacted materials may be insufficient. In addition, when the temperature of the polycondensation reaction is out of the above range, it is apprehended that physical properties of the polyester resin may deteriorate. The polycondensation reaction may be carried out for the required time until the resin reaches the desired intrinsic viscosity, for example, for an average residence time of 1 hour to 24 hours.

In order to reduce the content of the unreacted materials such as isosorbide, etc., which remain in the polyester resin, the unreacted raw materials may be discharged out of the system by intentionally maintaining the vacuum reaction for a long period of time at the end of the esterification or transesterification reaction or at the beginning of the polycondensation reaction, i.e., in a state in which the viscosity of the resin is not sufficiently high. When the viscosity of the resin is high, it is difficult for the raw materials remaining in the reactor to flow out of the system. For example, the unreacted materials remaining in the polyester resin, such as isosorbide, etc., may be effectively removed by leaving the reaction products, which are obtained through the esterification or transesterification reaction before the polycondensation reaction, for about 0.2 hours to about 3 hours under a reduced pressure of about 400 mmHg to about 1 mmHg or about 200 mmHg to about 3 mmHg. Here, a temperature of the product may be controlled to be equal to that of the esterification or transesterification reaction or that of the polycondensation reaction, or a temperature therebetween.

It is suitable that an intrinsic viscosity of the polymer after the polycondensation reaction is 0.30 dl/g to 1.0 dl/g. When the intrinsic viscosity is less than 0.30 dl/g, a reaction rate of the solid-phase reaction may be significantly lowered. When the intrinsic viscosity exceeds 1.0 dl/g, a viscosity of a melt may increase during the melt polymerization, and thus a possibility of polymer discoloration may be increased by a shear stress between a stirrer and the reactor, resulting in increased by-products such as acetaldehyde.

The polyester resin according to one embodiment may have a higher degree of polymerization by further performing a solid-phase reaction after the polycondensation reaction, as needed.

Specifically, the polymer obtained through the polycondensation reaction is discharged out of the reactor, and subjected to granulation. The granulation may be performed by a strand cutting method in which the polymer is extruded into a strand shape, solidified in a cooling liquid, and cut with a cutter, or an underwater cutting method in which a die hole is immersed in a cooling liquid, the polymer is directly extruded into the cooling liquid and cut with a cutter. In general, when the temperature of the cooling liquid should be kept low in the strand cutting method to solidify the strand well, there is no problem in cutting. In the underwater cutting method, it is preferable that the temperature of the cooling liquid is maintained in accordance with the polymer to make the shape of the polymer uniform. However, in the case of a crystalline polymer, the temperature of the cooling liquid may be intentionally kept high in order to induce crystallization during the discharge.

It is possible to remove water-soluble raw materials among unreacted raw materials such as isosorbide, etc. by washing the granulated polymer with water. The smaller the particle size, the wider the surface area relative to a weight of particles, and accordingly, it is more advantageous that a particle size is smaller. In order to achieve this purpose, the particles may be prepared to have an average weight of about 15 mg or less. For example, the granulated polymer may be washed with water by leaving the same in water at a temperature equal to the glass transition temperature of the polymer or at a temperature of about 50°C to about 100°C for 5 minutes to 10 hours.

The granulated polymer is subjected to a crystallization step to prevent fusion during the solid-phase reaction. The crystallization step may be performed under an atmosphere, inert gas, water vapor, or water vapor-containing inert gas, or in a solution, and may be performed at 110°C to 210°C or 120°C to 210°C. When the temperature is low, a rate at which crystals of the particles are formed may be excessively slow. When the temperature is high, a rate at which the surface of the particles is melted may be faster than a rate at which the crystals are formed, and thus the particles may adhere to each other to cause fusion. Since the heat resistance of the particles is increased as the particles are crystallized, it is also possible to perform crystallization by dividing the crystallization into several steps and raising the temperature stepwise.

The solid-phase reaction may be performed under an inert gas atmosphere such as nitrogen, carbon dioxide, argon, etc., or under a reduced pressure of 400 mmHg to 0.01 mmHg and at a temperature of 180°C to 220°C for an average residence time of 1 hour to 150 hours. By performing the solid-phase reaction, the molecular weight may be additionally increased, and the raw materials that do not react in the melting reaction but just remain, and a cyclic oligomer, acetaldehyde, etc. which are generated during the reaction may be removed.

The solid-phase polymerization may be performed until the intrinsic viscosity of the crystallized polymer reaches 0.65 dl/g or more, 0.70 dl/g or more, 0.75 dl/g or more or 0.80 dl/g or more, as measured at 35°C after dissolving the polymer at a concentration of 0.12% by weight in ortho-chlorophenol at 150 °C for 15 minutes.

Meanwhile, the polyester resin according to one embodiment may have a haze of 5% or less, 4.5% or less, 4% or less, 3.5% or less, 3% or less, 2.5% or less, 2% or less or 1% or less, as measured for a 6 mm thick specimen according to ASTM D1003-97, indicating high transparency. As the haze is most preferably 0% in theory, the lower limit may be 0% or more.

Further, the polyester resin according to one embodiment may have a draw ratio of 1 to 5. Specifically, the draw ratio may be 1 or more, or 2 or more, and 5 or less, 4 or less, or 3 or less.

In the extrusion blow molding (EMB) method, shear thinning characteristics are required, wherein a low viscosity is maintained in a high shear stress section inside a screw of a molding machine and a high viscosity is exhibited in a section forming a parison having low shear stress. Such shear thinning characteristics minimize heat generated by shear stress friction inside the screw, and lower the temperature of the parison itself, thereby preventing the friction heat from being generated at a temperature higher than a molding temperature set in the molding machine.

Further, in the case of multi-head extrusion blow molding method with higher shear stress, several parisons are made from one screw, which results in higher shear stress due to higher RPM of the screw for more extrusion amount. Accordingly, better shear thinning characteristics are required.

As the polyester resin satisfies the above-described Equation 1, it exhibits improved shear thinning characteristics, thereby providing a high-quality molded article by the extrusion blow molding method.

### Dicarboxylic acid or Derivative thereof

As used herein, the dicarboxylic acid component refers to a main monomer constituting the polyester resin, together with the diol component. The `dicarboxylic acid or derivative thereof' of the present invention refers to one or more compounds selected from a dicarboxylic acid and derivatives of the dicarboxylic acid. In addition, the 'derivative of dicarboxylic acid' refers to an alkyl ester of dicarboxylic acid (C1 to C4 lower alkyl ester such as monomethyl ester, monoethyl ester, dimethyl ester, diethyl ester, dibutyl ester, etc.) or a dicarboxylic acid anhydride. Accordingly, for example, the terephthalic acid or the derivative thereof collectively refers to a compound that reacts with a diol to form a terephthaloyl moiety, such as terephthalic acid; monoalkyl or dialkyl terephthalate; and terephthalic acid anhydride.

Specifically, the residue of the dicarboxylic acid component of the present invention may include any one or more residues selected from the group consisting of terephthalic acid, dimethylterephthalic acid, and derivatives thereof.

In addition, the polyester resin may include an acid moiety derived from other comonomer in addition to the terephthalic acid or the derivative thereof. Specifically, the comonomer may be one or more selected from the group consisting of aromatic dicarboxylic acid having 8 to 14 carbon atoms or derivatives thereof, and aliphatic dicarboxylic acid having 4 to 12 carbon atoms or derivatives thereof. Examples of the aromatic dicarboxylic acid having 8 to 14 carbon atoms or derivatives thereof may include aromatic dicarboxylic acids or derivatives thereof which are commonly used in the preparation of the polyester resin, for example, isophthalic acid, dimethyl isophthalate, phthalic acid, dimethyl phthalate, phthalic anhydride, naphthalene dicarboxylic acid such as 2,6-naphthalene dicarboxylic acid, etc., dialkylnaphthalene dicarboxylate such as dimethyl 2,6-naphthalene dicarboxylate, etc., diphenyl dicarboxylic acid, etc. The aliphatic dicarboxylic acid having 4 to 12 carbon atoms or derivatives thereof may include linear, branched, or cyclic aliphatic dicarboxylic acids or derivatives thereof which are commonly used in the preparation of the polyester resin, for example, cyclohexane dicarboxylic acids such as 1,4-cyclohexane dicarboxylic acid, 1,3-cyclohexane dicarboxylic acid, etc., cyclohexane dicarboxylate such as dimethyl 1,4-cyclohexane dicarboxylate, dimethyl 1,3-cyclohexane dicarboxylate, etc., and sebacic acid, succinic acid, isodecylsuccinic acid, maleic acid, maleic acid anhydride, fumaric acid, adipic acid, glutaric acid, azelaic acid, etc. The comonomer may be used in an amount of 0 mol% to 50 mol%, 0 mol% to 30 mol%, 0 mol% to 20 mol%, or 0 mol% to 10 mol% with respect to the total dicarboxylic acid or derivative thereof.

### Diol component

As used herein, the diol component refers to a main monomer constituting the polyester resin, together with the above-described dicarboxylic acid component. Particularly, the diol component includes isosorbide and cyclohexanedimethanol as comonomers, in addition to ethylene glycol.

The isosorbide is used to improve processability of the polyester resin to be prepared. Although the diol component of cyclohexanedimethanol as described improves transparency and impact resistance of the polyester resin, shear thinning characteristics should be improved and a crystallization rate should be lowered for improving processability. However, it is difficult to achieve these effects using only the cyclohexanedimethanol. Therefore, when including isosorbide as the diol component, the shear thinning characteristics are improved and the crystallization rate is lowered while maintaining the transparency and impact resistance, thereby improving the processability of the polyester resin to be prepared. Preferably, the diol moiety derived from the isosorbide is included in an amount of 0.1 mol% to 3 mol% with respect to the total diol moiety of the polyester resin. A detailed description of the content range of the diol moiety derived from isosorbide is as described in the description of the polyester resin.

The cyclohexanedimethanol (e.g., 1,2-cyclohexanedimethanol, 1,3-cyclohexanedimethanol or 1,4-cyclohexanedimethanol) is a component that contributes to transparency and impact resistance of the polyester resin to be prepared. Preferably, the diol moiety derived from the cyclohexanedimethanol is included in an amount of 8 mol% to 16 mol% with respect to the total diol moiety of the polyester resin. A detailed description of the content range of the diol moiety derived from cyclohexanedimethanol is as described in the description of the polyester resin.

Further, the polyester resin composition includes the sum of the diol moiety derived from the isosorbide and the diol moiety derived from the cyclohexanedimethanol in an amount of 9 mol% to 17 mol% with respect to the total diol moiety. A detailed description of the total content range of the diol moieties derived from isosorbide and cyclohexanedimethanol is as described in the description of the polyester resin.

The comonomer providing the diol moiety, in addition to the ethylene glycol, may include diols commonly used in the preparation of polyester resin, in addition to the above-described monomers. For example, diol monomers that may be used in polyethylene terephthalate may be used. However, the comonomer providing the diol moiety is isosorbide or a combination of isosorbide and cyclohexanedimethanol, which is advantageous in satisfying the physical properties to be achieved in the present invention.

### Branching agent

On the other than, the polyester resin of the present invention may include residues derived from a branching agent having 2 or more functional groups by adding the branching agent having 3 or more functional groups during polymerization thereof. Although not theoretically limited, the branching agent having 3 or more functional groups introduces side chains into the main chain of the polyester resin or graft-polymerizes the polyester resin to allow the polyester resin to have a complex chain structure, thereby satisfying Equation 1. The branching agent may be exemplified by, as a branching agent having 3 functional groups, benzene-1,2,4-tricarboxylic acid (trimellitic acid), benzene-1,2,4-tricarboxylic acid anhydride (trimellitic anhydride), benzene-1,2,3-tricarboxylic acid, benzene-1,2,3-tricarboxylic acid anhydride, or mixtures thereof, etc.

The residue derived from the branching agent having 3 or more functional groups is included in an amount of 1 part by weight or less with respect to 100 parts by weight of the total diol moiety.

### Composition including polyester resin

The polyester resin according to one embodiment of the present invention is mixed with polyethylene terephthalate to form a composition that has improved processability to provide a high-quality extrusion blow molded article.

Therefore, the type of the polyethylene terephthalate is not particularly limited. Non-limiting examples of the polyethylene terephthalate may be those prepared by polymerizing a dicarboxylic acid or derivative thereof and a diol, wherein the dicarboxylic acid or derivative thereof may be mainly a terephthalic acid or a derivative thereof, and the diol may be mainly ethylene glycol.

The polyester resin according to one embodiment may not only complement physical properties of virgin polyethylene terephthalate, but also complement the deteriorated physical properties of recycled polyethylene terephthalate to a very excellent level.

The recycled polyethylene terephthalate may be understood to encompass polyethylene terephthalate collected after use or all obtained therefrom. Specifically, the recycled polyethylene terephthalate may be obtained by classifying collected waste plastics according to predetermined standards, pulverizing and cleaning the same, and then re-pelletizing the same by melt extrusion, or may be obtained by depolymerizing the collected waste plastics to a monomer level and repolymerizing the same. Depending on the processing method, such recycled polyethylene terephthalate may be used after repelletization and crystallization, or after further polycondensation in a solid state after crystallization.

The recycled polyethylene terephthalate repolymerized after depolymerizing waste plastics to a monomer level may exhibit good properties that are not easily distinguishable from virgin polyethylene terephthalate. However, those obtained by repelletization of waste plastics generally have poor physical properties, as compared to virgin polyethylene terephthalate, making it difficult to produce a high-quality container by the extrusion blow molding method, when the recycled polyethylene terephthalate is used alone or even though mixed with virgin polyethylene terephthalate. However, the polyester resin according to one embodiment shows excellent miscibility even with such recycled polyethylene terephthalate and may improve processability thereof. In particular, the polyester resin according to one embodiment has excellent miscibility with recycled polyethylene terephthalate, thereby providing molded articles having no flow-marks on the surface even without using other additives.

The polyester resin may be mixed with recycled polyethylene terephthalate to effectively control the crystallization rate of the recycled polyethylene terephthalate, and may provide a polyester resin composition with a melting point, which is easy to dissolve.

### [ADVANTAGEOUS EFFECTS]

The above-described polyester resin satisfying Equation 1 according to the present invention and a composition including the same may improve processability, particularly, may greatly improve moldability in an extrusion blow molding method.

In addition, the polyester resin according to the present invention and the composition including the same are easy to recycle.

### [DETAILED DESCRIPTION OF THE EMBODIMENTS]

Hereinafter, preferred exemplary embodiments will be provided for better understanding of the present invention. However, the following exemplary embodiments are provided only for understanding the present invention more easily, but the content of the present invention is not limited thereby.

### Example 1

### Step 1) Esterification

Terephthalic acid (TPA; 3127.9 g), ethylene glycol (EG; 1320.1 g), 1,4-cyclohexanedimethanol (CHDM; 379.9 g), and isosorbide (ISB; 82.5 g) were placed in a 10 L-capacity reactor to which a column and a condenser capable of being cooled by water were connected, and GeO₂ (9.9 g) as a catalyst was introduced.

Subsequently, nitrogen was injected into the reactor to form a pressurized state in which the pressure of the reactor was higher than normal pressure by 1.0 kgf/cm². Then, the temperature of the reactor was raised to 220°C over 90 minutes, maintained at 220°C for 2 hours, and then raised to 260°C over 2 hours. Thereafter, an esterification reaction proceeded until the mixture in the reactor became transparent with the naked eye while maintaining the temperature of the reactor at 260°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

Then, the pressure of the 7 L-capacity reactor was reduced from normal pressure to 5 Torr (absolute pressure: 5 mmHg) over 30 minutes, and the temperature of the reactor was raised to 280°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg.

After granulation, the granulated polymer was washed with water by leaving the same in water at 70°C for 5 hours, and then left at 150°C for 1 hour to complete crystallization, thereby preparing a polyester resin.

### Example 2

### Step 1) Esterification

TPA (3429.9 g), EG (1588.5 g), CHDM (238.0 g), and ISB 90.5 g) were placed in a 10 L-capacity reactor to which a column and a condenser capable of being cooled by water were connected, and GeO₂ (10.6 g) as a catalyst, phosphoric acid (1.46 g) as a stabilizer, Polysynthren Blue RLS (Clarient, 0.016 g) as a blue toner, and Solvaperm Red BB (Clarient, 0.004 g) as a red toner were introduced.

Subsequently, nitrogen was injected into the reactor to form a pressurized state in which the pressure of the reactor was higher than normal pressure by 0.5 kgf/cm². Then, the temperature of the reactor was raised to 220°C over 90 minutes, maintained at 220°C for 2 hours, and then raised to 260°C over 2 hours. Thereafter, an esterification reaction proceeded until the mixture in the reactor became transparent with the naked eye while maintaining the temperature of the reactor at 260°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

Then, the pressure of the 7 L-capacity reactor was reduced from normal pressure to 5 Torr (absolute pressure: 5 mmHg) over 30 minutes, and the temperature of the reactor was raised to 275°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.65 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg.

The granules were left at 150°C for 1 hour to crystallize, and then were introduced into a 20 L-capacity solid phase polymerization reactor. Thereafter, nitrogen was flowed into the reactor at a rate of 50 L/min. At this time, the temperature of the reactor was raised from room temperature to 140°C at a rate of 40°C/hr, maintained at 140°C for 3 hours, and then raised to 205°C at a rate of 40°C/hr, and maintained at 205°C. The solid-phase polymerization reaction was performed until an intrinsic viscosity (IV) of the granules in the reactor reached 0.85 dl/g, thereby preparing a polyester resin.

### Example 3

### Step 1) Esterification

TPA (4135.1 g), EG (1652.5 g), CHDM (573.9 g), and ISB 72.7 g) were placed in a 10 L-capacity reactor to which a column and a condenser capable of being cooled by water were connected, and GeO₂ (13.1 g) as a catalyst was introduced.

Subsequently, nitrogen was injected into the reactor to form a pressurized state in which the pressure of the reactor was higher than normal pressure by 1.0 kgf/cm². Then, the temperature of the reactor was raised to 220°C over 90 minutes, maintained at 220°C for 2 hours, and then raised to 250°C over 2 hours. Thereafter, an esterification reaction proceeded until the mixture in the reactor became transparent with the naked eye while maintaining the temperature of the reactor at 250°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

Then, the pressure of the 7 L-capacity reactor was reduced from normal pressure to 5 Torr (absolute pressure: 5 mmHg) over 30 minutes, and the temperature of the reactor was raised to 265°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.85 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Example 4

### Step 1) Esterification

TPA (3275.5 g), EG (1101.0 g), CHDM (284.1 g), and ISB (144.0 g) were placed in a 10 L-capacity reactor to which a column and a condenser capable of being cooled by water were connected, and GeO₂ (10.2 g) as a catalyst was introduced.

Subsequently, nitrogen was injected into the reactor to form a pressurized state in which the pressure of the reactor was higher than normal pressure by 2.0 kgf/cm². Then, the temperature of the reactor was raised to 220°C over 90 minutes, maintained at 220°C for 2 hours, and then raised to 255°C over 2 hours. Thereafter, an esterification reaction proceeded until the mixture in the reactor became transparent with the naked eye while maintaining the temperature of the reactor at 255°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

Then, the pressure of the 7 L-capacity reactor was reduced from normal pressure to 5 Torr (absolute pressure: 5 mmHg) over 30 minutes, and the temperature of the reactor was raised to 285°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Example 5

### Step 1) Esterification

TPA (3062.1 g), EG (1269.5 g), CHDM (371.9 g), and ISB (134.7 g) were placed in a 10 L-capacity reactor to which a column and a condenser capable of being cooled by water were connected, and GeO₂ (9.7 g) as a catalyst was introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 250°C over 2 hours. Thereafter, an esterification reaction proceeded until the mixture in the reactor became transparent with the naked eye while maintaining the temperature of the reactor at 250°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

Then, the pressure of the 7 L-capacity reactor was reduced from normal pressure to 5 Torr (absolute pressure: 5 mmHg) over 30 minutes, and the temperature of the reactor was raised to 270°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Example 6

### Step 1) Esterification

TPA (3439.6 g), EG (1541.6 g), CHDM (328.2 g), and ISB 121.0 g) were placed in a 10 L-capacity reactor to which a column and a condenser capable of being cooled by water were connected, and GeO₂ (10.8 g) as a catalyst, phosphoric acid (1.46 g) as a stabilizer, Polysynthren Blue RLS (Clarient, 0.013 g) as a blue toner, and Solvaperm Red BB (Clarient, 0.004 g) as a red toner were introduced.

Subsequently, nitrogen was injected into the reactor to form a pressurized state in which the pressure of the reactor was higher than normal pressure by 1.0 kgf/cm². Then, the temperature of the reactor was raised to 220°C over 90 minutes, maintained at 220°C for 2 hours, and then raised to 265°C over 2 hours. Thereafter, an esterification reaction proceeded until the mixture in the reactor became transparent with the naked eye while maintaining the temperature of the reactor at 265°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 275°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.79 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Example 7

### Step 1) Esterification

Dimethyl terephthalate (DMT; 3684.4 g), EG (2684.7 g), CHDM (273.5 g), and ISB (332.7 g) were placed in a 10 L-capacity reactor to which a column and a condenser capable of being cooled by water were connected, and GeO₂ (9.9 g) as a catalyst was introduced.

Subsequently, nitrogen was injected into the reactor to brining the pressure of the reactor at normal pressure. Then, the temperature of the reactor was raised to 220°C over 90 minutes, maintained at 220°C for 2 hours, and then raised to 240°C over 2 hours. Thereafter, an esterification reaction proceeded until the mixture in the reactor became transparent with the naked eye while maintaining the temperature of the reactor at 240°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 265°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.82 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Comparative Example 1

### Step 1) Esterification

TPA (3232.0 g), EG (1062.3 g), CHDM (196.3 g), and ISB (1279.2 g) were placed in a 10 L-capacity reactor to which a column and a condenser capable of being cooled by water were connected, and GeO₂ (9.9 g) as a catalyst, Polysynthren Blue RLS (Clarient, 0.017 g) as a blue toner, and Solvaperm Red BB (Clarient, 0.006 g) as a red toner were introduced.

Subsequently, nitrogen was injected into the reactor to form a pressurized state in which the pressure of the reactor was higher than normal pressure by 0.5 kgf/cm². Then, the temperature of the reactor was raised to 220°C over 90 minutes, maintained at 220°C for 2 hours, and then raised to 260°C over 2 hours. Thereafter, an esterification reaction proceeded for 245 minutes until the mixture in the reactor became transparent with the naked eye while maintaining the temperature of the reactor at 260°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 100 mmHg, and maintained for 1 hour. Thereafter, the pressure was reduced to 5 Torr (absolute pressure: 5 mmHg) over 30 minutes, and the temperature of the reactor was raised to 280°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Comparative Example 2

### Step 1) Esterification

TPA (2561.1 g), EG (994.8 g), CHDM (399.9 g), and ISB (405.5 g) were placed in a 10 L-capacity reactor to which a column and a condenser capable of being cooled by water were connected, and GeO₂ (9.9 g) as a catalyst, Polysynthren Blue RLS (Clarient, 0.010 g) as a blue toner, and Solvaperm Red BB (Clarient, 0.003 g) as a red toner were introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 260°C over 2 hours. Thereafter, an esterification reaction proceeded for 245 minutes until the mixture in the reactor became transparent with the naked eye while maintaining the temperature of the reactor at 260°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 270°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.82 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

### Comparative Example 3

### Step 1) Esterification

TPA (3260.1 g), EG (1400.3 g), CHDM (198.0 g), and ISB (86.0 g) were placed in a 10 L-capacity reactor to which a column and a condenser capable of being cooled by water were connected, and GeO₂ (10.0 g) as a catalyst and phosphoric acid (1.46 g) as a stabilizer were introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 270°C over 2 hours. Thereafter, an esterification reaction proceeded for 245 minutes until the mixture in the reactor became transparent with the naked eye while maintaining the temperature of the reactor at 270°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 275°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.60 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg.

The granules were left at 150°C for 1 hour to crystallize, and then were introduced into a 20 L-capacity solid phase polymerization reactor. Thereafter, nitrogen was flowed into the reactor at a rate of 50 L/min. At this time, the temperature of the reactor was raised from room temperature to 140°C at a rate of 40°C/hr, maintained at 140°C for 3 hours, and then raised to 200°C at a rate of 40°C/hr, and maintained at 200°C. The solid-phase polymerization reaction was performed until an intrinsic viscosity (IV) of the granules in the reactor reached 0.75 dl/g, thereby preparing a polyester resin.

### Comparative Example 4

### Step 1) Esterification

TPA (3118.2 g), EG (1211.2 g), CHDM (459.8 g) and ISB (109.7 g) were placed in a 10 L-capacity reactor to which a column and a condenser capable of being cooled by water were connected, and GeO₂ (10.0 g) as a catalyst was introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 270°C over 2 hours. Thereafter, an esterification reaction proceeded for 245 minutes until the mixture in the reactor became transparent with the naked eye while maintaining the temperature of the reactor at 270°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 275°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.85 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 5

### Step 1) Esterification

TPA (3238.8 g), EG (1318.5 g), CHDM (337.1 g), and ISB (256.4 g) were placed in a 10 L-capacity reactor to which a column and a condenser capable of being cooled by water were connected, and GeO₂ (10.3 g) as a catalyst, Polysynthren Blue RLS (Clarient, 0.014 g) as a blue toner, and Solvaperm Red BB (Clarient, 0.006 g) as a red toner were introduced.

Subsequently, nitrogen was injected into the reactor to form a pressurized state in which the pressure of the reactor was higher than normal pressure by 1.0 kgf/cm². Then, the temperature of the reactor was raised to 220°C over 90 minutes, maintained at 220°C for 2 hours, and then raised to 250°C over 2 hours. Thereafter, an esterification reaction proceeded for 245 minutes until the mixture in the reactor became transparent with the naked eye while maintaining the temperature of the reactor at 250°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 280°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.82 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 6

### Step 1) Esterification

TPA (3002.1 g), EG (997.9 g), CHDM (468.8 g), and ISB (211.2 g) were placed in a 10 L-capacity reactor to which a column and a condenser capable of being cooled by water were connected, and GeO₂ (9.7 g) as a catalyst was introduced.

Subsequently, nitrogen was injected into the reactor to form a pressurized state in which the pressure of the reactor was higher than normal pressure by 2.0 kgf/cm². Then, the temperature of the reactor was raised to 220°C over 90 minutes, maintained at 220°C for 2 hours, and then raised to 255°C over 2 hours. Thereafter, an esterification reaction proceeded for 245 minutes until the mixture in the reactor became transparent with the naked eye while maintaining the temperature of the reactor at 255°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 285°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.78 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 7

### Step 1) Esterification

TPA (3207.0 g), EG (1233.7 g), CHDM (194.7 g), and ISB (423.1 g) were placed in a 10 L-capacity reactor to which a column and a condenser capable of being cooled by water were connected, and GeO₂ (10.0 g) as a catalyst and phosphoric acid (1.46 g) as a stabilizer were introduced.

Subsequently, nitrogen was injected into the reactor to form a pressurized state in which the pressure of the reactor was higher than normal pressure by 1.0 kgf/cm². Then, the temperature of the reactor was raised to 220°C over 90 minutes, maintained at 220°C for 2 hours, and then raised to 265°C over 2 hours. Thereafter, an esterification reaction proceeded for 245 minutes until the mixture in the reactor became transparent with the naked eye while maintaining the temperature of the reactor at 265°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 270°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.84 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 8

### Step 1) Esterification

TPA (3456.2 g), EG (1574.9 g) and ISB (395.2 g) were placed in a 10 L-capacity reactor to which a column and a condenser capable of being cooled by water were connected, and GeO₂ (10.6 g) as a catalyst, phosphoric acid (1.46 g) as a stabilizer, Polysynthren Blue RLS (Clarient, 0.012 g) as a blue toner, and Solvaperm Red BB (Clarient, 0.004 g) as a red toner were introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 270°C over 2 hours. Thereafter, an esterification reaction proceeded for 245 minutes until the mixture in the reactor became transparent with the naked eye while maintaining the temperature of the reactor at 270°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 275°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.75 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 9

### Step 1) Esterification

TPA (2641.8 g), EG (552.5 g), CHDM (1260.4 g), and ISB (92.9 g) were placed in a 10 L-capacity reactor to which a column and a condenser capable of being cooled by water were connected, and GeO₂ (9.7 g) as a catalyst, phosphoric acid (1.46 g) as a stabilizer, Polysynthren Blue RLS (Clarient, 0.015 g) as a blue toner, and Solvaperm Red BB (Clarient, 0.003 g) as a red toner were introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 260°C over 2 hours. Thereafter, an esterification reaction proceeded for 245 minutes until the mixture in the reactor became transparent with the naked eye while maintaining the temperature of the reactor at 260°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 285°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, thereby preparing a polyester resin.

### Comparative Example 10

### Step 1) Esterification

TPA (2422.3 g), EG (389.0 g), CHDM (1512.9 g), and ISB (106.5 g) were placed in a 10 L-capacity reactor to which a column and a condenser capable of being cooled by water were connected, and GeO₂ (9.5 g) as a catalyst, phosphoric acid (1.46 g) as a stabilizer, Polysynthren Blue RLS (Clarient, 0.016 g) as a blue toner, and Solvaperm Red BB (Clarient, 0.005 g) as a red toner were introduced.

Subsequently, nitrogen was injected into the reactor to form a pressurized state in which the pressure of the reactor was higher than normal pressure by 1.5 kgf/cm². Then, the temperature of the reactor was raised to 220°C over 90 minutes, maintained at 220°C for 2 hours, and then raised to 275°C over 2 hours. Thereafter, an esterification reaction proceeded for 245 minutes until the mixture in the reactor became transparent with the naked eye while maintaining the temperature of the reactor at 275°C. In this process, by-products flowed through the column and condenser. When the esterification reaction was completed, the nitrogen in the pressurized reactor was discharged to the outside to lower the pressure of the reactor to normal pressure, and then the mixture in the reactor was transferred to a 7 L-capacity reactor capable of vacuum reaction.

### Step 2) Polycondensation

The pressure of the 7 L-capacity reactor was reduced from normal pressure to 5 Torr (absolute pressure: 5 mmHg) over 30 minutes, and the temperature of the reactor was raised to 280°C over 1 hour to proceed a polycondensation reaction while maintaining the pressure of the reactor at 1 Torr (absolute pressure: 1 mmHg) or less. In the initial stage of the polycondensation reaction, a stirring rate was set high, but when the stirring force is weakened due to an increase in the viscosity of the reactant as the polycondensation reaction progresses or the temperature of the reactant rises above the set temperature, the stirring rate may be appropriately adjusted. The polycondensation reaction was performed until an intrinsic viscosity (IV) of the mixture (melt) in the reactor became 0.80 dl/g. When the intrinsic viscosity of the mixture in the reactor reached a desired level, the mixture was discharged out of the reactor and stranded. This was solidified with a cooling liquid and granulated to have an average weight of about 12 mg to about 14 mg, and then left at 150°C for 1 hour to complete crystallization, thereby preparing a polyester resin.

Physical properties of the polyester resins of Example 1 to Example 7 and Comparative Example 1 to Comparative Example 8 were measured by the following methods, and are shown in Table 1.

### Residue composition (method of confirming molar ratio of diol residue)

The residue composition (mol%) derived from an acid and a diol in the polyester resin was confirmed through 1H-NMR spectrum which was obtained at 25°C using a nuclear magnetic resonance apparatus (JEOL, 600MHz FT-NMR) after dissolving the sample in CDCl₃ solvent at a concentration of 3 mg/mL. In addition, the residue of TMA was confirmed by quantitative analysis of spectrum in which the content of benzene-1,2,4-triethylcarboxylate produced by the reaction of ethanol with TMA through ethanolysis was measured at 250 °C using gas chromatography (Agilent Technologies, 7890B), and it was confirmed as the content (wt%) with respect to the number of moles of the total diol moiety.

### Intrinsic viscosity (IV)

The polyester resin prepared at a concentration of 0.12% was dissolved in orthochlorophenol (OCP) at 150 °C, and then the intrinsic viscosity was measured in a constant temperature bath at 35°C using an Ubbelohde viscometer. In detail, the time (efflux time) t₀ taken for a solvent to pass between predetermined internal sections of the viscometer and the time t taken for a solution to pass the viscometer were measured. Then, a specific viscosity was calculated by substituting the t₀ value and the t value into Formula 1, and the intrinsic viscosity was calculated by substituting the calculated specific viscosity into Formula 2. [Formula 1] ${η}_{sp} = \frac{t - {t}_{0}}{{t}_{0}}$ [Formula 2] $\left[η\right] = \frac{\sqrt{1 + 4 {Aη}_{sp}} - 1}{2 AC}$

### Melting point (Tₘ)

The melting point of the prepared polyester resin was measured by differential scanning calorimetry (DSC). Mettler Toledo's DSC1 equipment was used as a measuring device. In detail, each of the polyester resins prepared in Examples and Comparative Examples was kneaded with a crystallizing agent at a ratio of 10 ppm to 100 ppm at a temperature of around 230°C to 250°C using a twin-screw extruder, and pretreated to have the maximum crystallinity at the corresponding composition, and then the melting point was measured at a heating rate of +10°C per minute under nitrogen.

### Cold crystallization temperature (T_{mc})

The cold crystallization temperature was measured using Mettler Toledo's DSC1 equipment. In detail, each of the polyester copolymers prepared in Examples and Comparative Examples was pretreated to have the maximum crystallinity at the corresponding composition as in the measurement of the melting point, and then completely melted, and then cold crystallization temperature was measured at a cooling rate of -2°C per minute under nitrogen.

### Crystallization half-time (t_{1/2})

The crystallization half-time was measured using Mettler Toledo's DSC1 equipment, in which each of the polyester copolymers prepared in Examples and Comparative Examples was pretreated to have the maximum crystallinity at the corresponding composition as in the measurement of the melting point, and then completely melted, and then maintained at 160°C for 60 minutes under nitrogen, and at this time, the time (unit: minute) consumed to generate half of the total heat generated during crystallization was measured.

### Chemical resistance test method (Haze measurement)

The injection-molded polyester specimen was placed in a container, and placed in 65% ethanol to sufficiently submerge the specimen, and the container containing the specimen and ethanol was stored in a hot air oven at 50°C for 1 day. Thereafter, the haze of the specimen was measured in accordance with the ASTM D1003-97 measurement method using Minolta's CM-3600A. As the haze is 5% or less, the chemical resistance is better.

### Draw ratio

The capacity of moldable bottles was 500 mL, 1 L, and 2 L, and molding was performed with 2 heads. In detail, the bottle was molded by forming a parison at a temperature of around 190°C to 250°C in Bekum EBM machine. The ratio of the transverse length of the molded bottle to the transverse length of the parison was defined as the draw ratio.

### Measurement of bottle weight

Bottle molding was performed using each of the polyester copolymer resins prepared in Examples and Comparative Examples. In detail, a 500 mL bottle was manufactured using a parison at a temperature of around 190°C to 250°C using Bekum EBM machine. The weight of 500 mL bottle thus manufactured was measured, and indicated as 'O' when it was 20 g or more, and indicated as 'X' when it was 20 g or less or when molding of the bottle was impossible.

### Measurement of ΔTm

Each of the molded bottles in the measurement of bottle weight was pulverized to obtain flakes. 25% by weight of the flakes thus obtained was blended with PET flakes, and kneaded at a temperature of around 250°C to 280°C using a twin-screw extruder to obtain pellets. The melting point of the pellet thus obtained was measured through DSC (differential scanning calorimetry) at a heating rate of +10°C per minute under nitrogen after completely melting. When the difference in the melting point between the pellet and PET flake that were subjected to the kneading process was lower than 10°C, it was indicated as 'O', and when 10°C or higher, it was indicated as 'X'.

**[Table 1]**

| | ISB-derived diol residue | CHDM-derived diol residue | ISB and CHDM-derived diol residue | Intrinsic viscosity (IV) of melt |
|---|---|---|---|---|
| Unit | mol% | mol% | mol% | dl/g |
| Example 1 | 1 | 14 | 15 | 0.80 |
| Example 2 | 1 | 8 | 9 | 0.65 |
| Example 3 | 0.5 | 16 | 16.5 | 0.85 |
| Example 4 | 3 | 10 | 13 | 0.75 |
| Example 5 | 3 | 14 | 17 | 0.80 |
| Example 6 | 2 | 11 | 13 | 0.79 |
| Example 7 | 3 | 10 | 13 | 0.82 |
| Comparative Example 1 | 0 | 7 | 7 | 0.75 |
| Comparative Example 2 | 0 | 18 | 18 | 0.82 |
| Comparative Example 3 | 1 | 7 | 8 | 0.60 |
| Comparative Example 4 | 2 | 17 | 19 | 0.85 |
| Comparative Example 5 | 5 | 12 | 17 | 0.82 |
| Comparative Example 6 | 4 | 18 | 22 | 0.78 |
| Comparative Example 7 | 8 | 7 | 15 | 0.84 |
| Comparative Example 8 | 7 | 0 | 7 | 0.75 |
| Comparative Example 9 | 2 | 55 | 57 | 0.80 |
| Comparative Example 10 | 3 | 72 | 75 | 0.80 |

**[Table 2]**

| | Draw ratio | Haze after ethanol immersion | Melting point | Cold crystallization temperature | Crystallization half-time | Physical properties factor¹⁾ |
|---|---|---|---|---|---|---|
| Unit | - | % | °C | °C | min | (n/a) |
| Example 1 | 1.5 | 2 | 209 | 141 | 7.8 | 37.7 |
| Example 2 | 3.5 | 4 | 225 | 150 | 2.2 | 153.4 |
| Example 3 | 1.5 | 2 | 208 | 140 | 9.9 | 29.4 |
| Example 4 | 2 | 3 | 211 | 142 | 5.7 | 52.6 |
| Example 5 | 1.5 | 3.5 | 207 | 138 | 13.4 | 21.3 |
| Example 6 | 3 | 4 | 212 | 144 | 4.2 | 72.8 |
| Example 7 | 2 | 4.5 | 211 | 142 | 5.7 | 52.6 |
| Comparative Example 1 | 5 | 25 | 232 | 175 | 0.7 | 580.8 |
| Comparative Example 2 | 1.5 | 20 | 201 | 134 | 26.3 | 10.3 |
| Comparative Example 3 | 5 | 10 | 230 | 152 | 0.9 | 388.6 |
| Comparative Example 4 | 1.5 | 7 | 207 | 136 | 19.4 | 14.5 |
| Comparative Example 5 | 1 | 10 | - | - | - | - |
| Comparative Example 6 | 1 | 25 | - | - | - | - |
| Comparative Example 7 | 1.5 | 10 | 203 | 135 | 22.6 | 12.1 |
| Comparative Example 8 | 4.5 | 3 | 230 | 156 | 1.4 | 256.7 |
| Comparative Example 9 | 1 | 5 | - | - | - | - |
| Comparative Example 10 | 4 | 4 | 247 | 165 | 2.2 | 185.3 |
| 1) [Equation 1] Physical properties factor = (Melting point*Cold crystallization temperature)/(Crystallization half-time*100) | | | | | | |

**[Table 3]**

| | Bottle weight > 20 g | ΔTm <10°C |
|---|---|---|
| Example 1 | O | O |
| Example 2 | O | O |
| Example 3 | O | O |
| Example 4 | O | O |
| Example 5 | O | O |
| Example 6 | O | O |
| Example 7 | O | O |
| Comparative Example 1 | X | O |
| Comparative Example 2 | O | X |
| Comparative Example 3 | X | O |
| Comparative Example 4 | O | X |
| Comparative Example 5 | O | X |
| Comparative Example 6 | O | X |
| Comparative Example 7 | O | X |
| Comparative Example 8 | X | O |
| Comparative Example 9 | O | X |
| Comparative Example 10 | X | X |

In Table 3, when the bottle weight is 20 g or more, there is an advantage that heavy-blow is possible during the extrusion blow molding, and when ΔTm <10°C is satisfied, there is an advantage of being reusable by blending PET with 25% by weight thereof.

In the case of Comparative Examples 1, 3, 8, and 10 of Table 3, the crystallinity of the resins was high, and therefore, a high molding temperature is required during high extrusion blow, which lowers the viscosity of the melt, and thus the bottle weight becomes 20 g or less or the bottle molding is impossible. Therefore, they are not suitable for heavy-blow molding.

On the contrary, in the case of Comparative Examples 5, 6, and 9 of Table 2, the crystallinity was too low and thus it was impossible to measure the melting point, cold crystallization temperature, and crystallization half-time when blended with PET resin. In the case of Comparative Examples 2, 4, and 7, the crystallinity of the resins was also low, and therefore, when blended with PET resin, the melting point can be measured, but the value is low, which reduces the recyclability of the resin.

In contrast, in the case of Examples 1 to 7 according to the present invention, the crystallinity of the resins was not too high, and thus thick bottles may be molded by lowering the molding temperature. It was also confirmed that the crystallinity of Examples 1 to 7 according to the present invention is not excessively low, and thus the melting point is not significantly lowered even when blended with PET resin, indicating recyclability.

## Claims

1. A polyester resin comprising a structure, wherein an acid moiety derived from a dicarboxylic acid or a derivative thereof and a diol moiety derived from a diol are repeated, and satisfying the following Equation 1: [Equation 1] $20 < \left(X*Y\right) / \left(Z*100\right) < 160$ in Equation 1,
X represents a melting point (unit: °C) of the polyester resin,
Y represents a cold crystallization temperature (unit: °C) of the polyester resin, and
Z represents a crystallization half-time (unit: min) of the polyester resin, all of them measured as outlined in the experimental part of the description.

2. The polyester resin of claim 1, wherein the polyester resin includes 0.1 mol% to 3 mol% of the diol moiety derived from isosorbide with respect to the total diol moiety.

3. The polyester resin of claim 1, wherein the polyester resin includes 8 mol% to 16 mol% of the diol moiety derived from cyclohexanedimethanol with respect to the total diol moiety.

4. The polyester resin of claim 1, wherein the polyester resin composition-includes 9 mol% to 17 mol% of the sum of the diol moiety derived from isosorbide and the diol moiety derived from cyclohexanedimethanol with respect to the total diol moiety.

5. The polyester resin of claim 1, wherein the residue of the dicarboxylic acid component includes any one or more residues selected from the group consisting of terephthalic acid, dimethylterephthalic acid, and derivatives thereof.

6. The polyester resin of claim 1, wherein the polyester resin includes residues derived from a branching agent having 3 or more functional groups.

7. The polyester resin of claim 6, wherein the polyester resin composition includes 1 part by weight or less of the residue derived from the branching agent having 3 or more functional groups with respect to 100 parts by weight of the total diol moiety.

8. The polyester resin of claim 1, wherein a melting point of the polyester resin composition is 200°C to 230°C and measured as outlined in the experimental part of the description.

9. The polyester resin of claim 1, wherein a cold crystallization temperature of the polyester resin composition is 130°C to 150°C and measured as outlined in the experimental part of the description.

10. The polyester resin of claim 1, wherein a crystallization half-time of the polyester resin composition is 1 minute to 15 minutes measured as outlined in the experimental part of the description.

11. A polyester resin composition, comprising:
the polyester resin of any one of claims 1 to 10; and
a polyethylene terephthalate.

## Patentansprüche

1. Polyesterharz, umfassend eine Struktur, in der eine von einer Dicarbonsäure oder einem Derivat davon abgeleitete Säureeinheit und eine von einem Diol abgeleitete Dioleinheit wiederholt sind, und das die folgende Gleichung 1 erfüllt: [Gleichung 1] $20 < \left(X*Y\right) / \left(Z*100\right) < 160$ wobei in Gleichung 1
X einen Schmelzpunkt (Einheit:°C) des Polyesterharzes darstellt,
Y eine Kaltkristallisationstemperatur (Einheit: °C) des Polyesterharzes darstellt und
Z eine Kristallisationshalbwertszeit (Einheit: min) des Polyesterharzes darstellt, die alle wie im experimentellen Teil der Beschreibung dargelegt gemessen werden.

2. Polyesterharz nach Anspruch 1, wobei das Polyesterharz 0.1 mol% bis 3 mol% der von Isosorbid abgeleiteten Dioleinheit, bezogen auf die gesamte Dioleinheit, enthält.

3. Polyesterharz nach Anspruch 1, wobei das Polyesterharz 8 mol% bis 16 mol% der von Cyclohexandimethanol abgeleiteten Dioleinheit, bezogen auf die gesamte Dioleinheit, enthält.

4. Polyesterharz nach Anspruch 1, wobei die Polyesterharzzusammensetzung 9 mol% bis 17 mol% der Summe der von Isosorbid abgeleiteten Dioleinheit und der von Cyclohexandimethanol abgeleiteten Dioleinheit, bezogen auf die gesamte Dioleinheit, enthält.

5. Polyesterharz nach Anspruch 1, wobei der Rest der Dicarbonsäurekomponente einen oder mehrere Reste enthält, ausgewählt aus der Gruppe, bestehend aus Terephthalsäure, Dimethylterephthalsäure und Derivaten davon.

6. Polyesterharz nach Anspruch 1, wobei das Polyesterharz Reste enthält, die von einem Verzweigungsmittel mit 3 oder mehr funktionellen Gruppen abgeleitet sind.

7. Polyesterharz nach Anspruch 6, wobei die Polyesterharzzusammensetzung 1 Gewichtsteil oder weniger des von dem Verzweigungsmittel mit 3 oder mehr funktionellen Gruppen abgeleiteten Restes, bezogen auf 100 Gewichtsteile der gesamten Dioleinheit, enthält.

8. Polyesterharz nach Anspruch 1, wobei ein Schmelzpunkt der Polyesterharzzusammensetzung 200°C bis 230°C beträgt und wie im experimentellen Teil der Beschreibung dargelegt gemessen wird.

9. Polyesterharz nach Anspruch 1, wobei eine Kaltkristallisationstemperatur der Polyesterharzzusammensetzung 130°C bis 150°C beträgt und wie im experimentellen Teil der Beschreibung dargelegt gemessen wird.

10. Polyesterharz nach Anspruch 1, wobei eine Kristallisationshalbwertszeit der Polyesterharzzusammensetzung 1 Minute bis 15 Minuten beträgt, gemessen wie im experimentellen Teil der Beschreibung dargelegt.

11. Polyesterharzzusammensetzung, umfassend:
das Polyesterharz nach einem der Ansprüche 1 bis 10; und
ein Polyethylenterephthalat.

## Revendications

1. Résine de polyester comprenant une structure dans laquelle un fragment acide dérivé d'un acide dicarboxylique ou d'un dérivé de celui-ci et un fragment diol dérivé d'un diol se répètent, et satisfaisant à l'Équation 1 suivante : [Équation 1] $20 < \left(X*Y\right) / \left(Z*100\right) < 160$ dans l'Équation 1,
X représente un point de fusion (unité : °C) de la résine de polyester,
Y représente une température de cristallisation à froid (unité :°C) de la résine de polyester, et
Z représente un temps de demi-cristallisation (unité : min) de la résine de polyester, tous ces paramètres étant mesurés comme indiqué dans la partie expérimentale de la description.

2. Résine de polyester selon la revendication 1, dans laquelle la résine de polyester comprend 0.1 mol% à 3 mol% du fragment diol dérivé de l'isosorbide par rapport à la totalité des fragments diol.

3. Résine de polyester selon la revendication 1, dans laquelle la résine de polyester comprend 8 mol% à 16 mol% du fragment diol dérivé du cyclohexanediméthanol par rapport à la totalité des fragments diol.

4. Résine de polyester selon la revendication 1, dans laquelle la composition de résine de polyester comprend 9 mol% à 17 mol% de la somme du fragment diol dérivé de l'isosorbide et du fragment diol dérivé du cyclohexanediméthanol par rapport à la totalité des fragments diol.

5. Résine de polyester selon la revendication 1, dans laquelle le résidu du composant acide dicarboxylique comprend un ou plusieurs résidus quelconques choisis dans le groupe constitué de l'acide téréphtalique, de l'acide diméthyltéréphtalique et de leurs dérivés.

6. Résine de polyester selon la revendication 1, dans laquelle la résine de polyester comprend des résidus dérivés d'un agent de ramification ayant 3 groupes fonctionnels ou plus.

7. Résine de polyester selon la revendication 6, dans laquelle la composition de résine de polyester comprend 1 partie en poids ou moins du résidu dérivé de l'agent de ramification ayant 3 groupes fonctionnels ou plus par rapport à 100 parties en poids de la totalité des fragments diol.

8. Résine de polyester selon la revendication 1, dans laquelle un point de fusion de la composition de résine de polyester est de 200°C à 230°C et est mesuré comme indiqué dans la partie expérimentale de la description.

9. Résine de polyester selon la revendication 1, dans laquelle une température de cristallisation à froid de la composition de résine de polyester est 130°C à 150°C et est mesurée comme indiqué dans la partie expérimentale de la description.

10. Résine de polyester selon la revendication 1, dans laquelle un temps de demi-cristallisation de la composition de résine de polyester est 1 minute à 15 minutes, mesuré comme indiqué dans la partie expérimentale de la description.

11. Composition de résine de polyester, comprenant :
la résine de polyester selon l'une quelconque des revendications 1 à 10 ; et
un polyéthylène téréphtalate.
